# EUROPÄISCHE PATENTSCHRIFT

(11) **EP 0 484 654 B1**
(45) Veröffentlichungstag und Bekanntmachung des Hinweises auf die Patenterteilung: **08.06.1994**
(21) Anmeldenummer: 91115168.6
(22) Anmeldetag: 07.09.1991
(51) Int. Cl.: G02B 6/38

(54) **Vorrichtung zur optisch leitenden Verbindung zweier Lichtwellenleiter**
Arrangement for an optically conducting connection of two lightguides
Dispositif pour la connexion optiquement conductive de deux guides d'ondes lumineuses

(30) Priorität: 03.11.1990 DE 4035259
(43) Veröffentlichungstag der Anmeldung: 13.05.1992
(73) Patentinhaber: KRONE Aktiengesellschaft, D-14167 Berlin (DE)
(72) Erfinder: Staudte, Bernd, Dipl.-Ing., W-1000 Berlin 19 (DE)

(56) Entgegenhaltungen:
- EP-A- 0 016 911
- DE-A- 3 235 090
- GB-A- 2 084 756
- US-A- 4 087 157

## Beschreibung

Die Erfindung bezieht sich auf eine Vorrichtung zur optisch leitenden Verbindung zweier Lichtwellenleiter, aus einem die Enden der Lichtwellenleiter übergreifenden, verdrillbaren, plastisch verformbaren Hülsenkörper. Eine derartige Vorrichtung wird als Schnellverbinder für Lichtwellenleiter insbesondere in Glasfaser-Datennetzen eingesetzt.

Eine Vorrichtung der gattungsgemäßen Art ist aus der EP 0.016.911 A1 vorbekannt. Der Hülsenkörper weist hierbei achsparalle Ausnehmungen auf, welche zwischen zwei kreisringförmigen Endteilen streifenförmige Stege zur Verbindung der beiden Endteile bilden. Die kreisringförmigen Endteile des Hülsenkörpers weisen radial gegenüberliegende Eingriffsnuten für kreisringförmige Verdrehstücke auf, die auf ihren Stirnseiten entsprechend radial gegenüberliegende Nocken tragen. Vor dem Verbinden der Enden zweier Lichtwellenleiter wird je ein Verdrehstück auf jeden der Lichtwellenleiter aufgeschoben, und die Enden der Lichtwellenleiter werden in den Hülsenkörper eingeschoben. Die Nocken der Verdrehstücke werden in Eingriff mit den stirnseitigen Ausnehmungen der kreisringförmigen Endteile des Hülsenkörpers gebracht. Anschließend werden die beiden Verdrehstücke in entgegengesetzten Richtungen gedreht, wodurch die streifenförmigen Stege zwischen den kreisringförmigen Endteilen des Hülsenkörpers verdrillt werden und sich eng an die beiden Enden der aneinanderstoßenden Lichtwellenleiter anlegen. Durch Verwendung eines plastisch verformbaren Materiales für den Hülsenkörper bleibt die Verformung erhalten, wodurch die beiden Enden der Lichtwellenleiter optisch leitend verbunden sind. Nachteilig hierbei ist, daß die beiden Enden der Lichtwellenleiter im Hülsenkörper nicht zentriert sind und daß keine vollständige Umschließung der Enden der beiden Lichtwellenleiter durch den Hülsenkörper erfolgt.

Aus der DE 32 35 090 A1 ist eine weitere Vorrichtung zur optisch leitenden Verbindung zweier Lichtwellenleiter vorbekannt, bei welcher zwischen zwei zylindrischen Endstücken ein Käfig aus elastisch verformbaren Stäben gebildet ist, die sich beim gegensinnigen Verdrehen der beiden kreisringförmigen Endteile in gleicher Weise an die Enden der beiden Lichtwellenleiter anlegen. Hierbei ist es erforderlich, die beiden kreisringförmigen Endteile nach dem Verdrillen gegeneinander zu verriegeln, wofür die beiden kreisringförmigen Endteile Eindrehungen bzw. Absätze aufweisen und mit Rastfedern zur Sicherung der verdrillten Endstellung versehen sein müssen.

Der Erfindung liegt von daher die Aufgabe zugrunde, eine Vorrichtung zu optisch leitenden Verbindung zweier Lichtwellenleiter der gattungsgemäßen Art zu schaffen, welche eine sichere Zentrierung beim Verbinden der beiden Lichtwellenleiter ermöglicht.

Die Lösung dieser Aufgabe ergibt sich aus den kennzeichnenden Merkmalen des Anspruches 1. Erfindungsgemäß ist ein mit einem durchgehenden Längsschlitz versehener äußerer Hülsenmantel vorgesehen, der selbst verdrillbar und plastisch verformbar ist und auf dessen Innenseite Stützstege ausgebildet sind, die im Querschnitt Kreissegmente bilden und die eine zentrische Durchgangsöffnung zur Aufnahme der Enden der Lichtwellenleiter umschließen. Die erfindungsgemäße Vorrichtung umfaßt somit einen verdrillbaren, plastisch verformbaren Hülsenkörper aus einem Hülsenmantel, der in der Abwicklung aus einem rechteckigen, flächigen Bauelement besteht, auf dessen Innenseite die Kreissegmente bildenden Stützstege ausgebildet sind. Dieses flächige Element kann in einfacher Weise zum Hülsenkörper zusammengerollt werden, wobei die Innenseiten der Kreissegmente flächig aufeinander liegen und zentrisch eine Durchgangsöffnung zur Aufnahme der Enden der Lichtwellenleiter umschließen. Die erfindungsgemäße Vorrichtung ist somit einfach in der Herstellung und einfach in der Montage. Der Hülsenkörper kann aber auch durch Gießen in einer Form hergestellt werden .

Der einen Schnellverbinder für Lichtwellenleiter bildende Hülsenkörper besteht somit aus einem plastisch verformbaren Spannelement, das auf seiner Innenseite die Stützstege zum Umschließen der Lichtwellenleiter aufweist.

In der einen Ausführungsform sind die Stützstege nur an beiden Stirnseiten des äußeren Hülsenkörpers ausgebildet, wobei von den Stützstegen eine Einrichtung zur Zentrierung der Lichtwellenleiter umschlossen ist. Diese besteht in weiterer erfindungsgemäßer Ausbildung aus drei Zentrierstäben aus Metall oder Kunststoff, zwischen deren Innenwänden die Lichtwellenleiter dreipunktförmig gehalten und zentriert sind.

In der anderen Ausführungsform sind die Stützstege zum unmittelbaren Umschließen der Enden der Lichtwellenleiter über die volle Länge des äußeren Hülsenmantels durchgehend ausgebildet. Hierbei können die Stützstege unmittelbar die zentrierende Durchgangsöffnung für die Lichtwellenleiter bilden.

Weitere vorteilhafte Ausgestaltungen der Erfindung ergeben sich aus den weiteren Unteransprüchen.

Die Erfindung ist nachfolgend anhand von zwei in den Zeichnungen näher dargestellten Ausführungsformen einer Vorrichtung zur optisch leitenden Verbindung zweier Lichtwellenleitern näher erläutert. Es zeigen:
- Fig. 1: den Hülsenkörper der Vorrichtung in der ersten Ausführungsform ,
- Fig. 2: eine Abwickelung des Hülsenkörpers mit daran befestigten Stützstegen ,
- Fig. 3: drei Zentrierstäbe zum Einbringen in den Hülsenkörper ,
- Fig. 4: zwei endseitige Verdrehstücke,
- Fig. 5: eine perspektivische Darstellung einer mittels des Hülsenkörpers nach Fig. 1 und der Verdrehstücke nach Fig. 4 gebildeten Verbindung zweier Lichtwellenleiter,
- Fig. 6: den Hülsenkörper in der zweiten Ausführungsform im zusammengerollten Zustand ,
- Fig. 7: den Hülsenkörper gemäß Fig. 6 im auseinandergerollten Zustand und
- Fig. 8 und 9: Perspektivdarstellungen weiterer Zentrierstücke .

Die Vorrichtung zur optisch leitenden Verbindung zweier Lichtwellenleiter 1,2 umfaßt einen Hülsenkörper 3 und zwei Verdrehstücke 4,5, mit deren Hilfe der Hülsenkörper 3 verdrillt und plastisch verformt wird, um die beiden Lichtwellenleiter 1,2 optisch leitend zu verbinden.

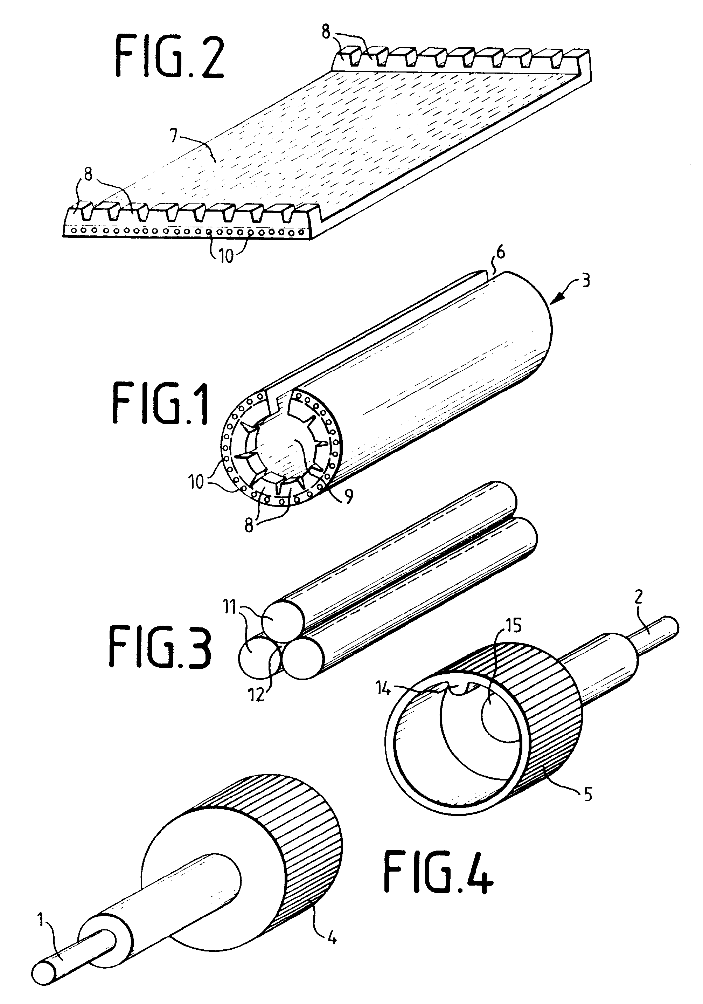

Der Hülsenkörper 3 besteht gemäß den Fig. 1 und 2 aus einem, einen durchgehenden Längsschlitz 6 aufweisenden, verdrillbaren, plastisch verformbaren äußeren Hülsenmantel 7 und aus auf dessen Innenseite angeordneten, im Querschnitt Kreissegmente bildenden Stützstegen 8, die eine zentrische Durchgangsöffnung 9 zur Aufnahme der Enden der Lichtwellenleiter 1,2 umschließen. Die Stützstege 8 sind nur an beiden axial gegenüberliegenden Stirnseiten des äußeren Hülsenmantels 7 ausgebildet, wie es in Fig. 2 dargestellt ist. Der verdrillbare und plastisch verformbare äußere Hülsenmantel 7 ist aus plastisch verformbarem Kunststoff gebildet, in welchen in Achsrichtung des Hülsenkörpers 3 ausgerichtete Versteifungselemente 10 eingesetzt sind, wie es in Fig. 2 dargestellt ist. Diese Versteifungselemente 10 bestehen aus Metallfasern, insbesondere Aluminium, mit einem plastischen Werkstoffverhalten. Der Hülsenmantel 7 selbst besteht aus einem verformbaren Weichkunststoff, insbesondere dem Zweikomponenten-Silikonkautschuk PTV-ME 622 B .

Wie es die Fig. 1 zeigt, stoßen die Seitenflächen der Stützstege 8 beim zusammengerollten Hülsenmantel 7 aneinander, wobei die innere Durchgangsöffnung 9 und gleichzeitig der äußere Längsschlitz 6 des Hülsenkörpers 3 gebildet werden. In die Durchgangsöffnung 9 sind als Einrichtung zur Zentrierung der Lichtwellenleiter 1,2 drei Zentrierstäbe 11 aus Metall oder Kunststoff eingesetzt, zwischen deren aneinanderstoßenden Innenwänden ein dreieckförmiger Zentrierkanal 12 gebildet ist, in dem die Lichtwellenleiter 1,2 dreipunktförmig gehalten sind.

Zum Verdrillen des Hülsenkörpers 3 sind die beiden in Fig. 4 näher dargestellten Verdrehstücke 4,5 vorgesehen, welche kappenförmig ausgebildet sind und im Boden jeweils eine Durchgangsöffnung 15 für den jeweiligen Lichtwellenleiter 1, 2 aufweisen. Auf der Innenseite des Innenraumes der Verdrehstücke 4,5 sind Nocken 14 vorgesehen, die zum Verdrillen des Hülsenkörpers 3 in dessen Längsschlitz 6 eingreifen, wie es nachfolgend näher beschrieben wird.

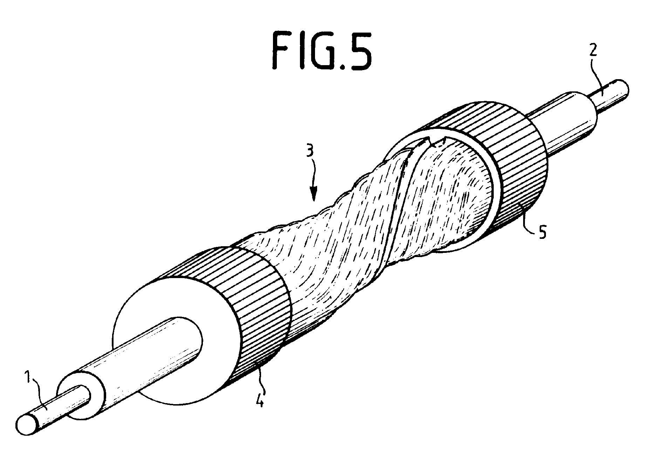

Der in Fig. 1 dargestellte Hülsenkörper 3 ist durch Zusammenrollen des in Fig. 2 dargestellten Hülsenmantels 7 oder durch Vergießen in einer Form gebildet. Die drei in einem Zentrierschlauch aufgenommenen Zentrierstäbe 11 gemäß Fig. 3 sind in die Durchgangsöffnung 9 des Hülsenkörpers 3 eingebracht. Nach dem Aufsetzen jeweils eines Verdrehstückes 4,5 auf jeden der beiden Lichtwellenleiter 1,2 werden deren stirnseitige Enden in den dreieckförmigen Zentrierkanal 12 zwischen den drei Zentrierstäben 11 eingeschoben. Die Nocken 14 der Verdrehstücke 4,5 greifen anschließend von beiden Seiten in den Längsschlitz 6 des Hülsenkörpers 3 ein, wie es in Fig. 5 dargestellt ist. Anschließend werden die Verdrehstücke 4,5 gegeneinander verdreht, wobei der Hülsenkörper 3 verdrillt und plastisch verformt wird, so daß die Lichtwellenleiter 1,2 in den Zentrierstäben 11 festgelegt werden.

Wenn die Verdrehstücke 4,5 zum Verdrillen des Hülsenkörpers 3 radial und konträr zueinander verdreht werden, so wird ein Torsionsmoment auf den einen Spannkörper bildenden Hülsenkörper 3 ausgeübt und die plastiziden Metallfasern im Mantelstück 7 werden mit einer definierten Kraft um einen definierten Verdrehwinkel verdrillt. Da sich das Torsionsmoment mit einem gleichbleibenden Kraftbetrag ausbreitet, erfolgt in Verbindung mit der Plastizität der beteiligten Werkstoffe eine Verringerung des Innendurchmessers des Hülsenkörpers 3 und damit eine Wirkung auf die Zentrierstäbe 11, welche die eingeführten Lichtleitfasern 1,2, bedingt durch die Geometrie der Zentrierstäbe 11, an einen definierten Punkt innerhalb der Zentrierstäbe 11 bringen und diese gleichzeitig über deren gesamte Längserstreckung festspannen. Zusätzlich können die Zentrierstäbe 11 auch in Axialrichtung Reibwiderstände aufweisen.

Die Verdrehstücke 4,5, welche jeweils auf ihrer Innenseite einen Eingriffsvorsprung in Form der Nocken 14 aufweisen, greifen kraft- und formschlüssig in den eine Eingriffsnut bildenden durchgehenden Längsschlitz 6 ein. Die Zentrierstäbe 11 können in einer Richtung eine Rauhung aufweisen. Wenn die Verdrehstücke 4,5 an ihren Enden radial und konträr verdreht werden, so überträgt sich ein entstehenden Torsionsmoment auf den Hülsenkörper 3 und verdrillt die plastiziden Metallfasern, die das Versteifungselement des Hülsenmantels 7 bilden , um einen bestimmten Winkel. Da sich das Torsionsmoment mit einem konstanten Kraftbetrag über den gesamten Hülsenkörper 3 ausbreitet, solange die Kräfte bzw. die Momente den Bereich der Abscherung nicht erreichen, erfolgt eine Verringerung des Durchmessers des Hülsenkörpers 3, wodurch die Kraftweiterleitung auf die Zentrierstäbe 11 wirkt und die darin enthaltenen Lichtwellenleiter 1,2 fest einspannt werden .

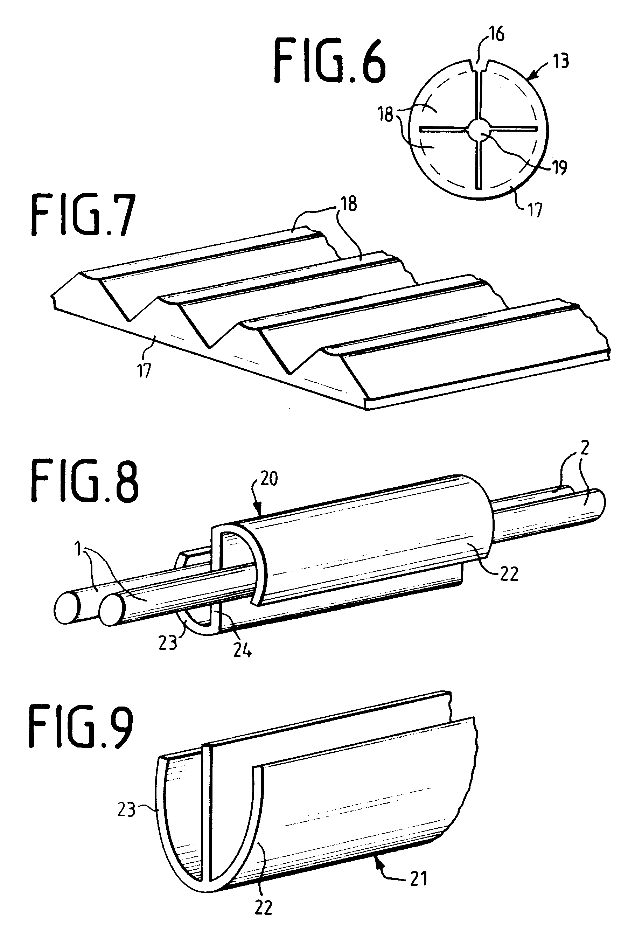

Bei der in den Fig. 6 und 7 dargestellten zweiten Ausführungsform des Hülsenkörpers 13 wird auf innere Zentrierstäbe verzichtet. Bei dieser Ausführungsform sind die Stützstege 18 zum unmittelbaren Umschließen der Lichtwellenleiter 1,2 über die volle Länge des äußeren Hülsenmantels 3 durchgehend ausgebildet, wie es in Fig. 7 dargestellt ist. Die Lichtwellenleiter 1,2 werden hierbei unmittelbar in die zentrische Durchgangsöffnung 19 des Hülsenkörpers 13 eingeführt. Die weitere Ausbildung mit dem Längsschlitz 6 und den Verdrehstücken 4,5 entspricht der ersten Ausführungsform.

In den Fig. 8 und 9 sind weitere Zentrierstücke 20,21 dargestellt , die anstelle der Zentrierstäbe 11 gemäß Fig . 3 in den Hülsenkörper 3 gemäß der ersten Ausführungsform nach Fig.1 eingesetzt werden können . Die Zentrierstücke 20,21 dienen jeweils zur zentrierten ,optisch leitenden Verbindung von zwei Paaren von Lichtwellenleitern 1,2 . Jedes Zentrierstück 20,21 besteht vorzugsweise aus PTFE-Kunststoff zur Verbindung von PCS-Fasern aus Kunststoff, die einen Durchmesser von etwa 200 bis 1.000 um haben . Jedes Zentrierstück 20,21 ist aus zwei halbkreisförmigen , gegenüberliegenden Lappen 22,23 gebildet , die mittels einer zentralen Wand 24 verbunden sind und die Taschen zur Aufnahme je eines Paares von zu verbindenden Lichtwellenleitern 1,2 bilden . In der Ausführungsform nach Fig. 8 liegen die Lappen 23 , 24 diagonal gegenüber und gehen von den entgegengesetzten Enden der Wand 24 aus . In der Ausführungsform nach Fig. 9 liegen die Lappen 23,24 an einem Ende und auf gegenüberliegenden Seiten der Wand 24. Beim Verdrillen des Hülsenkörpers 3, in den ein Zentrierstück 20 oder 21 eingeschoben ist , werden die in den Taschen befindlichen Paare von Lichtwellenleitern 1,2 durch das auf diese wirkende Moment und der daraus folgenden Durchmesserverkleinerung an den höchsten Punkt des jeweiligen Zentrierstückes 20,21 gedrückt ,somit zentriert und fest verbunden .

### Bezugszeichenliste

- 1, 2: Lichtwellenleiter
- 3: Hülsenkörper
- 4,5: Verdrehstücke
- 6: Längsschlitz
- 7: Hülsenmantel
- 8: Stützsteg
- 9: Durchgangsöffnung
- 10: Versteifungselement
- 11: Zentrierstab
- 12: Zentrierkanal
- 13: Hülsenkörper
- 14: Nocken
- 15: Durchgangsöffnung
- 16: Längsschlitz
- 17: Hülsenmantel
- 18: Stützsteg
- 19: Durchgangsöffnung
- 20: Zentrierstück
- 21: Zentrierstück
- 22: Lappen
- 23: Lappen
- 24: Wand

## Patentansprüche

1. Vorrichtung zur optisch leitenden Verbindung zweier Lichtwellenleiter, aus einem die Enden der Lichtwellenleiter übergreifenden, verdrillbaren, plastisch verformbaren Hülsenkörper,
**dadurch gekennzeichnet**,
daß der Hülsenkörper (3,13) aus einem, einen durchgehenden Längsschlitz (6) aufweisenden, verdrillbaren und plastisch verformbaren äußeren Hülsenmantel (7, 17) und aus auf dessen Innenseite angeordneten, im Querschnitt Kreissegmente bildenden Stützstegen (8,18) ausgebildet ist, die eine zentrische Durchgangsöffnung (9,19) zur Aufnahme der Enden der Lichtwellenleiter (1,2) umschließen.

2. Vorrichtung nach Anspruch 1, dadurch gekennzeichnet, daß die Stützstege (8) an beiden Stirnseiten des äußeren Hülsenmantels (7) ausgebildet sind und daß eine Einrichtung zur Zentrierung der Lichtwellenleiter (1,2) von den Stützstegen (8) umschlossen ist.

3. Vorrichtung nach Anspruch 2, dadurch gekennzeichnet, daß die Einrichtung zur Zentrierung der Lichtwellenleiter (1,2) aus drei Zentrierstäben (11) aus Metall oder Kunststoff gebildet ist, zwischen deren Innenwänden die Lichtwellenleiter (1,2) dreipunktförmig gehalten sind.

4. Vorrichtung nach Anspruch 1, dadurch gekennzeichnet, daß die Stützstege (18) zum unmittelbaren Umschließen der Enden der Lichtwellenleiter (1,2) über die volle Länge des äußeren Hülsenmantels (17) durchgehend ausgebildet sind.

5. Vorrichtung nach einem der Ansprüche 1 bis 4, dadurch gekennzeichnet, daß der verdrillbare und plastisch verformbare äußere Hülsenmantel (7,17) aus einem plastisch verformbaren Kunststoff gebildet ist, in welchen in Achsrichtung des Hülsenkörpers (3,13) ausgebildete Versteifungselemente (10) eingesetzt sind.

6. Vorrichtung nach Anspruch 5, dadurch gekennzeichnet, daß die Versteifungselemente (10) aus Metallfasern, insbesondere Aluminium, mit einem plastischen Werkstoffverhalten bestehen .

7. Vorrichtung nach einem der Ansprüche 1 bis 6 , dadurch gekennzeichnet , daß Zentrierstücke (20,21) aus Kunststoff zur Aufnahme je zweier Paare von Lichtwellenleitern (1,2) vorgesehen, aus zwei Lappen (22,23) und einer zentralen Wand (24) ausgebildet und unter Bildung von Taschen zwischen den Lappen (22,23) und der zentralen Wand (24) zur Aufnahme der Lichtwellenleiter (1,2 in den Hülsenkörper (3) eingeschoben sind .

## Revendications

1. Dispositif pour la connexion optiquement conductive de deux guides d'ondes lumineuses, comprenant une douille torsadable et plastiquement déformable, ladite douille recouvrant les extrémités des guides d'ondes lumineuses, caractérisé en ce que la douille (3, 13) est formée d'une enveloppe extérieure (7, 17) pourvue d'une fente oblongue continue (6) et étant torsadable et plastiquement déformable, et de nervures-supports (8, 18) sur le côté intérieur, qui forment des segments d'un cercle et qui entourent une ouverture de passage centrale (9, 19) pour loger les extrémités des guides d'ondes lumineuses (1, 2).

2. Dispositif selon la revendication 1,
caractérisé en ce que les nervures-supports (8) sont prévues seulement aux deux fronts de l'enveloppe extérieure (7) de la douille et qu'un dispositif pour le centrage des guides d'ondes lumineuses (1, 2) est entouré par les nervures-supports (8).

3. Dispositif selon la revendication 2,
caractérisé en ce que le dispositif pour le centrage des guides d'ondes lumineuses (1, 2) est composé de trois barres de centrage (11) en métal ou plastique, entre les parois intérieures desquelles les guides d'ondes lumineuses (1, 2) sont tenus à trois points.

4. Dispositif selon la revendication 1,
caractérisé en ce que les nervures-supports (18) sont agencées en forme continue pour directement entourer les extrémités des guides d'ondes lumineuses (1, 2) sur la longueur totale de l'enveloppe extérieure (17).

5. Dispositif selon une des revendications 1 à 4,
caractérisé en ce que l'enveloppe extérieure (7, 17) de la douille est formée d'une matière plastiquement déformable, dans laquelle des éléments de renforcement (10) s'étendant en direction axiale de la douille (3, 13) sont insérés.

6. Dispositif selon la revendication 5,
caractérisé en ce que les éléments de renforcement (10) consistent en fibre métalliques, en particulier aluminium ayant une tenue plastique.

7. Dispositif selon une des revendications 1 à 6,
caractérisé en ce que des pièces de centrage (20, 21) en plastique sont prévues pour loger chacune deux paires de guides d'ondes lumineuses (1, 2), sont formées de deux languettes (22, 23) et d'une paroi centrale (24) et sont insérées dans la douille (3) entre les languettes (22, 23) et la paroi centrale (24) ainsi formant des poches pour loger les guides d'ondes lumineuses (1, 2).

## Claims

1. An arrangement for an optically conducting connection of two lightguides, comprising a sleeve body overlapping the ends of the lightguides, said sleeve body being twistable and plastically deformable, characterized by that the sleeve body (3, 13) is composed of an outer sleeve jacket (7, 17) with a continuous longitudinal slot (6), said sleeve jacket being twistable and plastically deformable, and of support webs (8, 18) on the inner side of said sleeve jacket, said support webs forming circular segments, in their cross sections, and enclosing a central through-opening (9, 19) for receiving the ends of the lightguides (1, 2).

2. An arrangement according to claim 1, characterized by that the support webs (8, 18) are adapted the two front sides of the outer sleeve jacket (7), and that a device for centering the lightguides (1, 2) is enclosed by the support webs (8).

3. An arrangement according to claim 2, characterized by that the device for centering the light-guides (1, 2) is formed of three centering rods (11) made of metal or plastic, between the inner walls of which the lightguides (1, 2) are held at three points.

4. An arrangement according to claim 1, characterized by that the support webs (18) are adapted continuously over the full length of the outer sleeve jacket (17) to immediately enclose the ends of the lightguides (1, 2).

5. An arrangement according to one of claims 1 to 4, characterized by that the twistable and plastically deformable outer sleeve jacket (7, 17) is made of a plastically deformable plastic material, into which, in axial direction of the sleeve body (3, 13), aligned stiffening elements (10) are inserted.

6. An arrangement according to claim 5, characterized by that the stiffening elements (10) are composed of metal fibres, in particular aluminium, having a plastic material behaviour.

7. An arrangement according to one of claims 1 to 6, characterized by that the centering pieces (20, 21) made of plastic and adapted to receive two pairs each of lightguides (1, 2), are formed of two lugs (22, 23) and of a central wall (24), and are slid into the sleeve body (3), thereby forming pockets between the lugs (22, 23) and the central wall (24) for receiving the lightguides (1, 2).
